Europäisches Patentamt

(19) European Patent Office    (11) Numéro de publication: **0 190 731**

Office européen des brevets    **B1**

(12) **FASCICULE DE BREVET EUROPÉEN**

(45) Date de publication du fascicule du brevet:    (51) Int. Cl.⁴: **H 04 L 7/00**, H 04 J 3/06
21.06.89

(21) Numéro de dépôt: 86101442.1

(22) Date de dépôt: 04.02.86

(54) Dispositif de transmission d'un signal d'horloge accompagné d'un signal de synchronisation.

(30) Priorité: 07.02.85  FR 8501723

(43) Date de publication de la demande:
13.08.86 Bulletin 86/33

(45) Mention de la délivrance du brevet:
21.06.89 Bulletin 89/25

(84) Etats contractants désignés:
BE CH DE FR GB IT LI NL SE

(56) Documents cité:
FR-A-2 315 736
FR-A-2 324 180
FR-A-2 427 747
US-A-4 164 629

(73) Titulaire: **ALCATEL CIT, 33, rue Emeriau, F-75015 Paris (FR)**

(72) Inventeur: **Denhez, Alain, 43 Avenue du Général de Gaulle, F-78140 Velizy- Villacoublay (FR)**
Inventeur: **Hargoaa, Francis, 12 Avenue de la Grande Armée, F-75017 Paris (FR)**
Inventeur: **Aubree, Jean, 1 rue Cardon, F-78380 Bougival (FR)**

(74) Mandataire: **Weinmiller, Jürgen, Lennéstrasse 9 Postfach 24, D-8133 Feldafing (DE)**

## Description

L'invention concerne la transmission d'un signal d'horloge accompagné d'un signal de synchronisation dans un dispositif de transmission comportant un émetteur délivrant sur une même liaison le signal d'horloge et le signal de synchronisation, un ou plusieurs répéteurs dans la liaison, et un récepteur pour délivrer séparément le signal d'horloge et le signal de synchronisation à des organes utilisateurs. De tels dispositifs de transmission, décrits par exemple dans FR-A-2 324 180, sont couramment utilisés pour le pilotage d'organes électroniques à partir d'une seule horloge, et généralement le signal de synchronisation correspond à la suppression d'une impulsion du signal d'horloge ce qui est obtenu à l'émission par une modification, momentanée, de la fréquence du signal d'horloge, et nécessite de reconstituer le signal d'horloge à la réception.

Les demandes EP-A-0 190 729 et EP-A-0 190 730, diposées à la même date qui la présente demande, décrivent et revendiquent également des dispositifs de transmission d'un signal d'horloge accompagné d'un signal de synchronisation.

La présente invention a pour but la transmission d'un signal d'horloge comportant un signal de synchronisation obtenu sans modification de la fréquence du signal d'horloge.

L'invention a pour objet un dispositif de transmission d'un signal d'horloge accompagné d'un signal de synchronisation, comportant un émetteur ayant une horloge, un récepteur relié à l'émetteur par une liaison comportant au moins un répéteur, ledit récepteur délivrant à des organes utilisateurs un signal d'horloge et un signal de synchronisation, caractérisé par le fait que l'émetteur comporte, outre l'horloge, un circuit de synchronisation, une bascule, un circuit de sélection, un circuit à retard, et un inverseur de sortie, que le circuit de synchronisation est relié en entrée à l'horloge, et par une première et une deuxième sorties au circuit de sélection, que le circuit de sélection est également relié en entrée à une sortie directe de la bascule par le circuit à retard et en sortie à une entrée de remise à zéro de la bascule, et que la bascule a une entrée horloge reliée à ladite horloge, une entrée de données reliée à un potentiel positif, et sortie directe reliée à l'inverseur de sortie qui délivre en sortie de l'émetteur, un signal d'horloge et de synchronisation.

D'autres caractéristiques et avantages de l'invention ressortiront de la description qui va suivre d'un exemple de réalisation illustré par les figures annexées dans lesquelles:

- la figure 1 représente un dispositif de transmission de l'invention,
- la figure 2 représente un émetteur du dispositif de transmission de la figure 1,
- la figure 3 représente un récepteur du dispositif de transmission de la figure 1,
- la figure 4 représente un répéteur du dispositif de transmission de la figure 1,
- la figure 5 représente un dispositif de transmission de l'invention comportant des groupes de répéteurs,
- les figures 6, 7, 8 sont des chronogrammes de signaux dans l'émetteur, le récepteur et le répéteur de la figure 1.

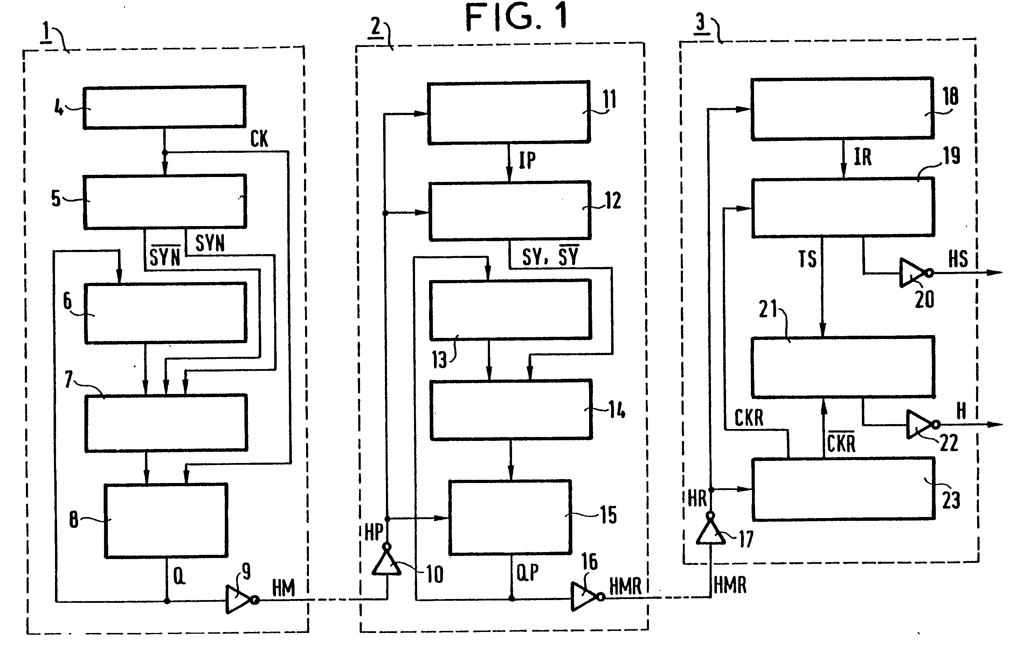

Le dispositif de transmission de l'invention représenté figure 1 comporte un émetteur 1, un répéteur 2 et un récepteur 3.

Dans l'émetteur 1, une horloge 4 délivre des impulsions d'horloge CK à un circuit de sychronisation 5 et à une bascule 8; la bascule 8 est reliée en sortie à un circuit à retard 6 et à un inverseur 9 auxquels elle délivre un signal Q, l'inverseur 9 délivrant le signal d'horloge et de synchronisation HM en sortie de l'émetteur; le circuit à retard 6 est relié en sortie à un circuit de sélection 7 également relié en entrée au circuit de synchronisation 5 duquel il reçoit des impulsions de synchronisation SYN ; et $\overline{SYN}$; le circuit de sélection est relié en sortie à la bascule 8.

Dans le répéteur 2, un inverseur 10 est relié en entrée à l'émetteur 1 duquel il reçoit le signal d'horloge et de synchronisation HM, et en sortie à un circuit de test 11, à un circuit de synchronisation 12 et à une bascule 15, auxquels il délivre un signal HP; le circuit de test 11 est relié en sortie au circuit de synchronisation auquel il délivre une impulsion IP, la bascule 15 est reliée en sortie à un circuit à retard 13 et à un inverseur 16 auxquels elle délivre un signal QP, l'inverseur 16 délivrant un signal d'horloge et de synchronisation HMR en sortie du répéteur; le circuit à retard 13 est relié en sortie à un circuit de sélection 14 également relié en entrée au circuit de synchronisation 12 duquel il reçoit des impulsions de synchronisation SY et $\overline{SY}$ ; le circuit de sélection est relié en sortie à la bascule 15.

Dans le récepteur 3, un inverseur 17 est relié en entrée à la sortie du répéteur 2, duquel il reçoit le signal d'horloge et de synchronisation HMR, et en sortie à un circuit de test 18 et à un circuit de détection 23 des impulsions du signal d'horloge, auxquels il délivre un signal HR; le circuit de test est relié en sortie à un circuit de restitution 19 du signal de synchronisation auquel il délivre une impulsion IR, et le circuit de détection 23 est relié par une première sortie délivrant un signal CKR au circuit de restitution 19, et par une deuxième sortie délivrant un signal $\overline{CKR}$ à un circuit de synchronisation et de division 21; le circuit de restitution 19 est relié par une première sortie à un inverseur 20 qui délivre un signal de synchronisation HS en sortie et par une deuxième sortie délivrant une impulsion de synchronisation TS au circuit de synchronisation et de division 21, lequel est relié en sortie à un inverseur 22 délivrant un signal d'horloge H en sortie du récepteur 3.

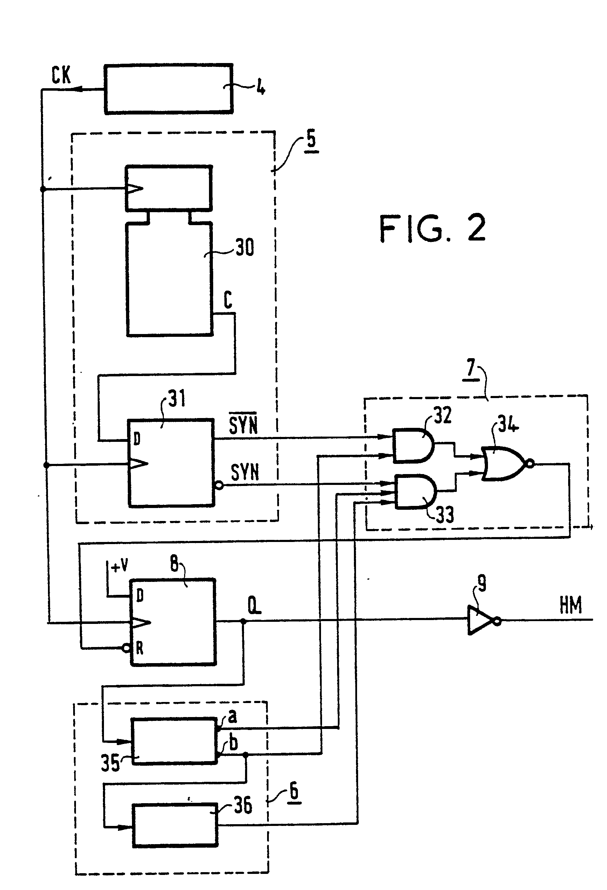

La figure 2 représente l'émetteur 1 de la figure 1. Le circuit de synchronisation est constitué par un compteur 30 et une bascule 31 de type D; l'entrée de comptage du compteur est reliée à la sortie de l'horloge 4 de laquelle il reçoit les impulsions d'horloge CK, et sa sortie "ripple carry" est reliée à l'entrée de données de la bascule 31 et lui délivre un signal C lorsque le compteur a atteint sa capacité de comptage. La bascule 31 a une entrée horloge reliée à la sortie de l'horloge 4, une sortie directe et une sortie inverse reliées au circuit de sélection 7 auquel elles délivrent des impulsions de synchronisation SYN et S̄Ȳ̄N̄, respectivement. La bascule 8, de type D, a une entrée de données reliée à un potentiel positif + V, une entrée horloge reliée à la sortie de l'horloge 4, une entrée de remise à zéro reliée en sortie du circuit de sélection 7, et une sortie directe reliée à l'inverseur 9; la bascule 8 délivre un signal d'horloge et de synchronisation Q à l'inverseur qui délivre le signal d'horloge et de synchronisation HM en sortie de l'émetteur 1. Le circuit à retard 6 est constitué par une première ligne à retard 35 et une deuxième ligne à retard 36; la première ligne à retard 35 a une entrée reliée à la sortie directe de la bascule 8, une première sortie a et une deuxième sortie b reliées au circuit de sélection 7; la deuxième ligne à retard 36 a une entrée reliée à la deuxième sortie b de la première ligne à retard 35 et une sortie reliée au circuit de sélection 7. Le circuit de sélection 7 est constitué par une première et une deuxième porte ET 32, 33 et par une porte NON-OU 34; la première porte ET 32 a une entrée reliée à la sortie directe de la bascule 31 et une autre entrée reliée à la deuxième sortie b de la première ligne à retard 35; la deuxième porte ET 33 à une première entrée reliée à la sortie inverse de la bascule 31, une deuxième entrée reliée à la première sortie a de la première ligne à retard 35 et une troisième entrée reliée à la sortie de la deuxième ligne à retard 36; la porte NON-OU 34 a une entrée reliée à la sortie de la première porte ET 32, une autre entrée reliée à la sortie de la deuxième porte ET 33, et une sortie reliée à l'entrée de remise à zéro de la bascule 8.

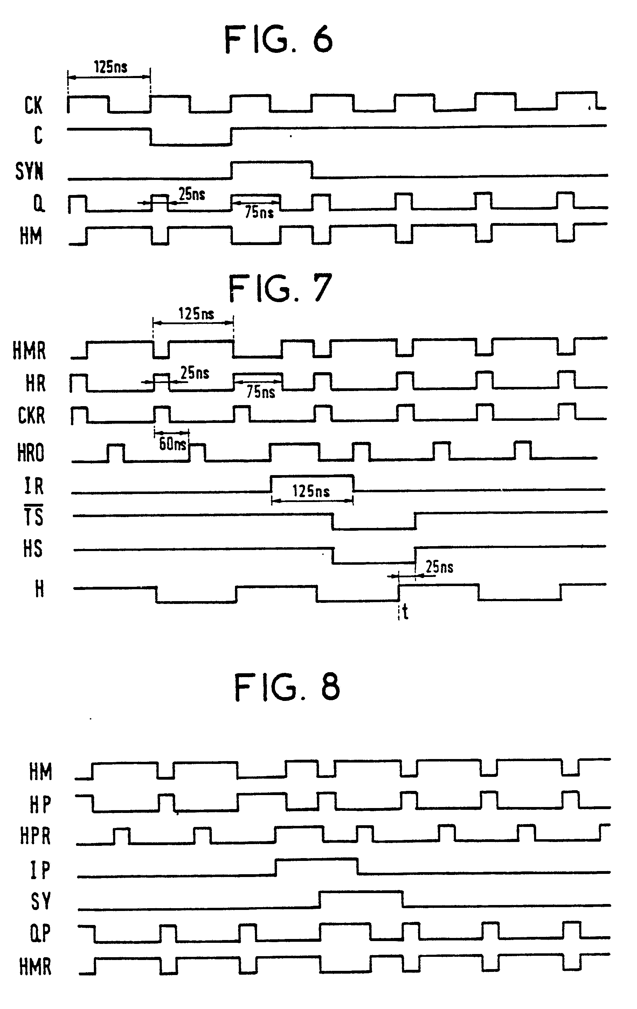

A titre d'exemple on supposera que l'horloge 4 délivre des impulsions d'horloge CK à la fréquence de 8 MHz donc de période 125 nanosecondes, que la première ligne à retard 35 introduit un retard de 10 ns sur sa première sortie a et un retard de 25 ns sur sa deuxième sortie b, et que la deuxième ligne à retard introduit un retard de 50 ns. La figure 6 est un chronogramme de signaux dans l'émetteur; en l'absence d'impulsion C en sortie du compteur 30, la sortie directe de la bascule 31 a la valeur 1 et la sortie inverse, a la valeur 0, courbe SYN du chronogramme et la bascule 8 est remise à zéro 25 ns après l'apparition d'une impulsion dans le signal Q en sortie. Lorsque le compteur atteint sa capacité de comptage il délivre une impulsion négative C, la sortie directe de la bascule 31 prend la valeur 0, et la sortie inverse la valeur 1 (impulsion S̄Ȳ̄N̄); la porte ET 32 est inactive, et la porte ET 33 est activée 75 ns après l'apparition d'une impulsion dans le signal Q en sortie de la bascule 8, ce qui remet cette bascule à zéro; on obtient donc une impulsion de durée 75 ns dans le signal Q en sortie de la bascule 8, cette impulsion correspondant à une impulsion de synchronisation, la porte ET 33 est désactivée par la première sortie a de la première ligne à retard 35, 10 ns après la remise à zéro de la bascule 8; de cette manière le signal délivré par le circuit de sélection 7 reprend sa valeur initiale lorsqu'il s'est écoulé, depuis le front montant de l'impulsion du signal CK pour la prise en compte de l'impulsion C du compteur 30 un temps égal à 85 ns augmenté de 2 fois le temps de propagation t'p de la bascule 8 et, de 2 fois le temps de propagation t'p du circuit de sélection soit 85 ns + 2 tp + 2 t'p, ce temps étant inférieur à la durée d'une période des impulsions d'horloge CK afin que tous les fronts des impulsions d'horloge soient bien pris en compte. Le signal Q étant appliqué à l'inverseur 9, celui-ci délivre, en sortie de l'émetteur, le signal d'horloge et de synchronisation HM dans lequel les impulsions d'horloge, de durée 25 ns, correspondent au front positif des impulsions d'horloge CK, et une impulsion de synchronisation de durée 75 ns, remplace une impulsion d'horloge; la fréquence de répétition des impulsions de synchronisation est fonction de la capacité de comptage du compteur 30; si ce compteur a une capacité de comptage de mille, le temps séparant deux impulsions de synchronisation est de 125 microsecondes.

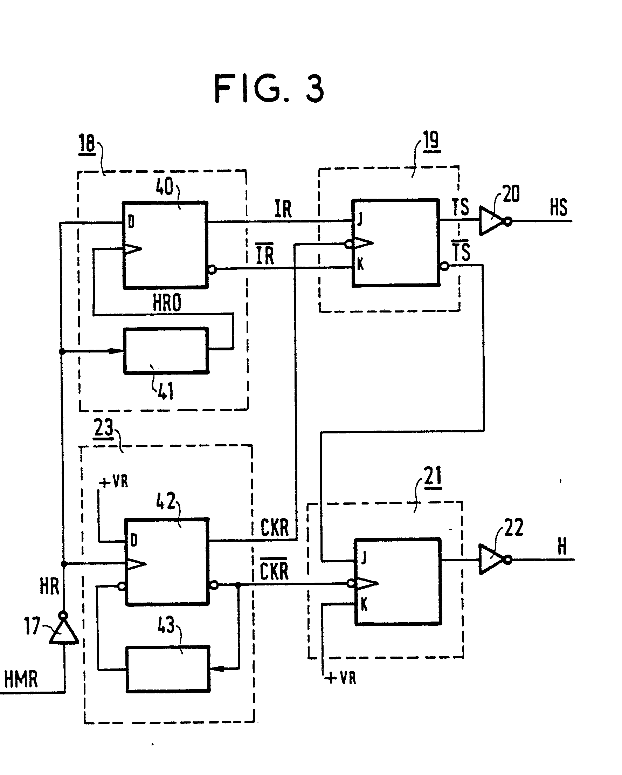

La figure 3 représente le récepteur 3 de la figure 1. Le circuit de test 18 est constitué par une bascule 40, de type D, et une ligne à retard 41 introduisant un retard supérieur à la durée d'une impulsion d'horloge et inférieure à la durée d'une impulsion de synchronisation. La bascule 40 a une entrée de données reliée à la sortie de l'inverseur 17 qui délivre le signal HR, une entrée horloge reliée à la sortie de la ligne à retard 41, une sortie directe délivrant une impulsion IR et une sortie inverse delivrant une impulsion ĪR̄; la ligne à retard 41 est reliée en entrée à la sortie de l'inverseur 17 et délivre en sortie un signal HRO qui correspond au signal HR retardé de par exemple 60 ns. Le circuit de restitution 19, pour restituer et délivrer le signal de synchronisation acheminé par le signal d'horloge et de synchronisation HMR reçu par le récepteur, est constitué par une bascule de type JK, ayant une première entrée, J, reliée à la sortie directe de la bascule 40, une deuxième entrée, K, reliée à la sortie inverse de la bascule 40, une entrée horloge reliée à la première sortie du circuit de détection 23, une sortie directe reliée à l'inverseur 20 et une sortie inverse reliée au circuit de synchronisation et de division 21. Le circuit de détection 23 est constitué par une bascule 42, de type D, et une ligne à retard 43; la bascule a une entrée de données reliée à un potentiel positif + VR, une entrée horloge reliée à la sortie de l'inverseur 17, une sortie directe reliée à l'entrée horloge de la bascule du circuit de restitution 19 et une sortie inverse reliée d'une part à l'entrée de remise à zéro de la bascule 42 par la ligne à retard 43, et d'autre part au circuit de synchronisation et de division 21. Le circuit de synchronisation et de division 21 est constitué par une bascule de type JK, ayant une première entrée, J, reliée à la sortie inverse de la bascule du circuit de restitution 19, une entrée horloge reliée à la sortie inverse de la bascule 42, une deuxième entrée, K, reliée à un potentiel positif + VR, et une sortie reliée à l'inverseur 22.

La figure 7 est un chronogramme de signaux dans le récepteur. Le signal HMR, à l'entrée du récepteur est soit le signal HM délivré par l'émetteur lorsque la liaison entre l'émetteur et le recepteur est suffisamment courte et ne nécessite pas l'emploi d'un, ou de plusieurs, répéteur (s), soit le signal délivré par le dernier répéteur d'un groupe de répéteurs dans le cas ou la liaison émetteur récepteur nécessite l'emploi d'un, ou de plusieurs répéteur (s). Le signal HR, inverse du signal HMR comporte des impulsions d'horloge de 25 ns et des impulsions de synchronisation de 75 ns; le signal HRO, en sortie de la ligne à retard 41 est le signal HR retardé de 60 ns. Lorsque la bascule 40 du circuit de test reçoit des impulsions d'horloge du signal HR, la sortie directe de la bascule a la valeur 0, et la sortie inverse la valeur 1; lorsque la bascule reçoit une impulsion de synchronisation elle délivre une impulsion IR sur sa sortie directe et une impulsion $\bar{I}R$ sur sa sortie inverse, de durée 125 ns, correspondant à la période du signal d'horloge ; les impulsions IR et $\bar{I}R$ apparaissent donc lorsque l'impulsion de synchronisation dans le signal HR est pris en compte par le signal HRO. Le circuit de test 18 effectue donc un test de la durée des impulsions du signal HR et délivre des impulsions IR et $\bar{I}R$ quand la durée d'une impulsion du signal HR est supérieure au retard de la ligne à retard 41, c'est-à-dire lorsque le signal HR comporte une impulsion de sychronisation; le rôle du circuit de test est donc de détecter les impulsions de synchronisations par un test de la durée des impulsions du signal HR et de délivrer des impulsions IR et $\bar{I}R$ suite à la détection. Le circuit de détection 23 délivre en sortie directe de la bascule 42 le signal CKR constitué par des impulsions à chaque front positif du signal HR; la durée des impulsions CKR est donnée par la ligne à retard 43 dont le retard est de 25 ns; le signal CKR est donc constitué d'impulsions de période 125 ns, et pilote la circuit de restitution 19; lorsque la bascule 19 du circuit de restitution reçoit de la bascule 40 l'impulsion IR elle délivre une impulsion de synchronisation TS en sortie directe et une impulsion de synchronisation $\bar{T}S$ en sortie inverse. L'inverseur 20 qui reçoit l'impulsion de synchronisation TS délivre le signal de synchronisation HS. La bascule du circuit de synchronisation et de division 21 est pilotée par le signal $\bar{C}K\bar{R}$ et délivre un signal qui après inversion par l'inverseur 22 donne le signal d'horloge H en sortie du récepteur, ce signal ayant une fréquence moitiée de celle du signal d'horloge dans le signal HMR à l'entrée du récepteur; la période du signal d'horloge H est donc de 250 ns. A l'instant t du signal H, figure 7, le signal $\bar{C}K\bar{R}$ prend en compte l'impulsion de synchronisation TS, ce qui permet de synchroniser le signal d'horloge H pour qu'il présente bien une impulsion positive lorsque le récepteur délivre le signal de synchronisation HS.

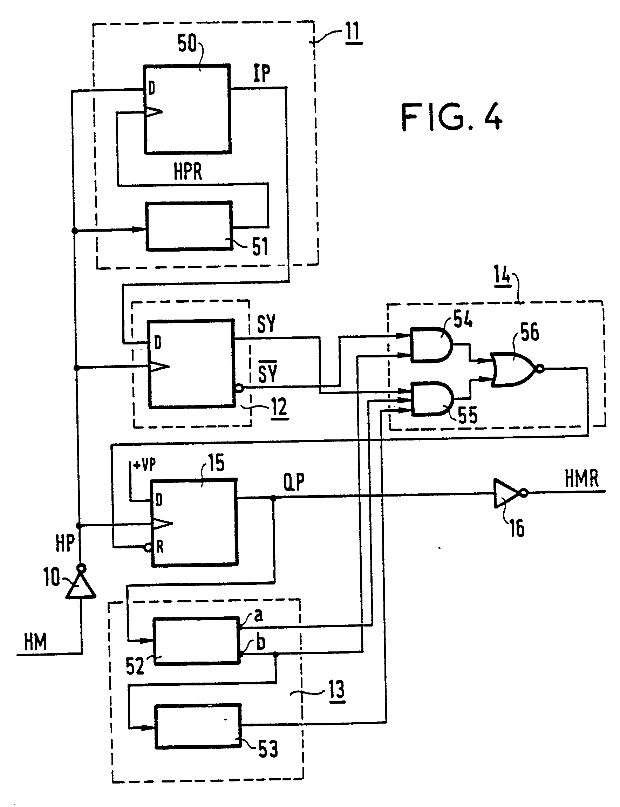

La figure 4 représente le répéteur 2 de la figure 1. Le circuit de test 11 est identique au circuit de test 18 du récepteur; il comporte donc une bascule 50 de type D et une ligne à retard 51; l'entrée de données de la bascule et l'entrée de la ligne à retard sont reliées à la sortie de l'inverseur 10 qui délivre un signal HP qui correspond au signal HM inversé.

La ligne à retard délivre à l'entrée horloge de la bascule un signal HPR qui est le signal HP retardé. La sortie directe de la bascule 50 délivre une impulsion IP au circuit de synchronisation 12 qui est constitué par une bascule de type D ayant une entrée de données reliée à la sortie directe de la bascule 50, une entrée horloge reliée à la sortie de l'inverseur 10, une sortie directe et une sortie inverse reliées au circuit de sélection 14 auquel elles délivrent les impulsions de synchronisation SY et $\bar{S}\bar{Y}$. La bascule 15, de type D, a une entrée de données reliée à un potentiel positif + VP, une entrée horloge reliée à la sortie de l'inverseur 10, une entrée de remise à zéro reliée à la sortie du circuit de sélection 14, et une sortie directe délivrant le signal QP et reliée d'une part à l'inverseur 16 d'autre part au circuit à retard 13.

Le circuit à retard 13 est identique au circuit à retard 6 de l'émetteur; il comporte donc une première ligne à retard 52 ayant une première sortie a et une deuxième sortie b, et une deuxième ligne à retard 53 ayant son entrée reliée à la deuxième sortie de la première ligne à retard; le circuit de sélection 14 est identique au circuit de sélection 7 de l'émetteur et comporte une première porte ET 54, une deuxième porte ET 55 et une porte NON-OU 56.

La première porte ET 54 a une première entrée reliée à la sortie inverse de la bascule du circuit de synchronisation 12, et une deuxième entrée reliée à la deuxième sortie b de la première ligne à retard 52; la deuxième porte ET 55 a une première entrée reliée à la sortie directe de la bascule du circuit de synchronisation 12, une deuxième entrée reliée à la première sortie a de la première ligne à retard 52 et une troisième entrée reliée à la sortie de la deuxième ligne à retard 53; la porte OU-NON 56 a une entrée reliée à la sortie de la première porte ET, une autre entrée reliée à la sortie de la deuxième porte ET, et une sortie reliée à l'entrée de remise à zéro de la bascule 15.

Comme dans le circuit à retard de l'émetteur, la première ligne à retard 52 introduit sur sa première sortie a un retard de 10 ns, et sur sa deuxième sortie b un retard de 25 ns; la deuxième ligne à retard introduit sur sa sortie un retard de 50 ns.

La figure 8 est un chronogramme de signaux dans le répéteur qui reçoit en entrée le signal d'horloge et de synchronisation HM de l'émetteur, ou d'un autre répéteur lorsque la liaison émetteur-récepteur comporte plusieurs répéteurs en série.

Le circuit de test 11 reçoit de l'inverseur 10 le signal HP; lorsque la bascule 50 reçoit des impulsions d'horloge du signal HP sa sortie directe a la valeur 0; lorsque la bascule 50 reçoit une impulsion de synchronisation celle-ci est prise en compte et la sortie directe délivre une impulsion positive IP de 125 ns de durée. Dans le circuit de synchronisation 12 les sorties directe et inverse de la bascule ont les valeurs 0 et 1 respectivement, en l'absence d'impulsion IP à l'entrée de la bascule, et les valeurs 1 et 0 lorsque l'impulsion positive IP est appliquée à l'entrée de la bascule.

La sortie de la bascule 15 délivre des impulsions en phase avec les impulsions d'horloge du signal HP; lorsqu'une impulsion de synchronisation apparaît dans le signal HP, la sortie de la bascule 15 prend la valeur 1 est remise à zéro, par l'intermédiaire de la porte ET 55 du circuit de sélection, 75 ns après ; cette porte ET 55 n'est active que pendant 10 ns, le signal délivré par la première sortie a de la première ligne à retard 52 reprenant la valeur 0 avec un retard de 10 ns sur le retour à zéro de la sortie de la bascule 15; compte tenu des temps de propagation de la bascule 15 et du circuit de sélection, le signal délivré par le circuit de sélection reprend sa valeur initiale au bout d'un temps égal à 85 ns + 2 tp + 2 t'p après le front montant de l'impulsion HP délivré à l'entrée d'horloge de la bascule 15; ce temps est comme dans l'émetteur, inférieur à la durée d'une période des impulsions d'horloge dans le signal HP, soit 125 ns selon l'exemple pris pour l'émetteur, afin de permettre que tous les fronts montants des impulsions d'horloge soient bien pris en compte. Le signal QP, en sortie de la bascule 15 étant appliqué à l'inverseur 16, on retrouve en sortie un signal d'horloge et de synchronisation HMR identique au signal d'horloge et de synchronisation HM appliqué à l'entrée du répéteur qui décale, par rapport à l'entrée, le signal de synchronisation d'une période du signal d'horloge, soit 125 ns.

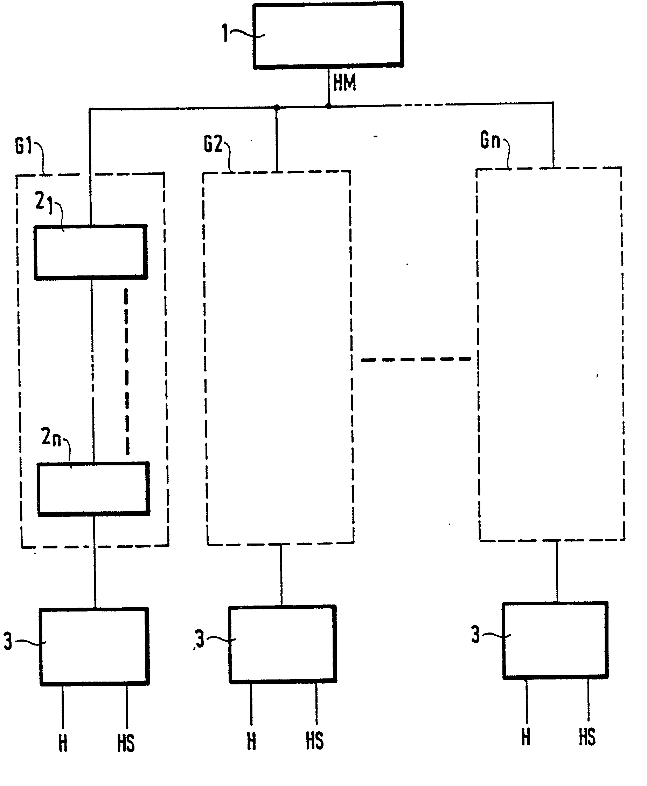

La figure 5 représente la transmission d'un signal d'horloge et de synchronisation HM, délivré par un émetteur 1, à des récepteurs 3.

Chaque récepteur est relié à l'émetteur par un groupe de répéteurs, G1, G2,... Gn; chaque groupe de répéteurs comporte n répéteurs $2_1$,...$2_n$ en série. Cette distribution s'applique au cas où chaque récepteur délivre des signaux d'horloge H et des signaux de synchronisation HS à des organes utilisateurs, non représentés, ces organes utilisateurs faisant partie d'un même dispositif. De cette manière les signaux de synchronisation HS délivrés par les récepteurs sont tous en phase, puisqu'ils sont décalés de n périodes du signal d'horloge par rapport au signal de synchronisation délivré par l'émetteur dans le signal d'horloge et de synchronisation HM de même les signaux d'horloge H délivrés par les récepteurs présentent tous une impulsion positive lors de l'impulsion de synchronisation ce qui assure leur mise en phase.

Dans le cas d'un émetteur ayant une horloge à basse fréquence, donc relativement lente, les circuits de l'émetteur et du récepteur peuvent accepter des marges de temps importantes et le, ou les, répéteur (s) peut être un simple buffeur. Par contre dans le cas d'une horloge à fréquence élevée, 8 MHz par exemple, il est nécessaire d'utiliser un répéteur de l'invention.

**Revendications**

1. Dispositif de transmission d'un signal d'horloge accompagné d'un signal de synchronisation, comportant un émetteur (1), ayant une horloge (4), un récepteur (3) relié à l'émetteur par une liaison comportant au moins un répéteur (2), ledit récepteur délivrant à des organes utilisateurs un signal d'horloge (H) et un signal de synchronisation (HS), caractérisé par le fait que l'émetteur (1) comporte, outre l'horloge, un circuit de synchronisation (5), une bascule (8), un circuit de sélection (7), un circuit à retard (6), et un inverseur de sortie (9), que le circuit de synchronisation (5) est relié en entrée à l'horloge, et par une première et une deuxième sorties au circuit de sélection (7), que le circuit de sélection est également relié en entrée à une sortie directe de la bascule (8) par le circuit à retard et en sortie à une entrée de remise à zéro de la bascule, et que la bascule (8) a une entrée horloge reliée à ladite horloge (4), une entrée de données reliée à un potentiel positif, et sa sortie directe reliée à l'inverseur de sortie (9) qui délivre en sortie de l'émetteur, un signal d'horloge et de synchronisation (HM).

2. Dispositif de transmission selon la revendication 1, caractérisé par le fait que le circuit de synchronisation (5) comporte un compteur (30) et une bascule (31) de type (D), le compteur ayant une entrée de comptage reliée à l'horloge (4), la bascule (31) ayant une entrée de données reliée à une sortie "ripple carry" du compteur, une sortie directe et une sortie inverse reliées au circuit de sélection (7), que le circuit à retard (6) comporte une première (35) et une deuxième (36) lignes à retard en série, la première ligne à retard étant reliée en entrée à la sortie directe de la bascule (8) de l'émetteur et en sortie au circuit de sélection (7) par une première (a) et une deuxième (b) sorties, la deuxième ligne à retard étant reliée en entrée à la deuxième sortie (b) de la première ligne à retard et en sortie au circuit de sélection, et que le circuit de sélection (7) comporte une première (32) et une deuxième (33) portes ET reliées en sortie à une porte NON-OU (34) elle même reliée en sortie à l'entrée de remise à zéro de la bascule (8) de l'émetteur, la première porte ET (32) ayant une première entrée reliée à la sortie directe de la bascule (31) du circuit de synchronisation (5) et une deuxième entrée reliée à la deuxième sortie (b) de la première ligne à retard, la deuxième porte ET ayant une première entrée reliée à la sortie inverse de la bascule (31) du circuit de synchronisation (5), une deuxième entrée reliée à la première sortie (a) de la première ligne à retard et une troisième entrée reliée à la sortie de la deuxième ligne à retard.

3. Dispositif de transmission selon la revendication 1, caractérisé par le fait qu'un répétiteur (2) comporte un inverseur d'entrée (10) un circuit de test (11), un circuit de synchronisation (12), une bascule (15), un circuit de sélection (14), un circuit à retard (13) et un inverseur de sortie (16), que le circuit de test est relié en entrée à l'inverseur d'entrée et en sortie au circuit de synchronisation, que le circuit de synchronisation (12) est également relié en entrée à l'inverseur d'entrée, et par une première et une deuxième sorties au circuit de sélection, que le circuit de sélection (14) est également relié en entrée à une sortie directe de la bascule (15) par le circuit à retard et en sortie à une entrée de remise à zéro de la bascule, et que la bascule (15) a une entrée horloge reliée à l'inverseur d'entrée, une entrée de données reliée à un potentiel positif, et sa sortie directe reliée à l'inverseur de sortie (16) qui délivre un signal d'horloge et de synchronisation (HMR).

4. Dispositif de transmission selon la revendication 3, caractérisé par le fait que le circuit de test (11) comporte une bascule (50) de type (D) et une ligne à retard (51) reliée en sortie à une entrée horloge de la bascule, une entrée de la ligne à retard et une entrée de données de la bascule étant reliées à l'inverseur d'entrée, que le circuit de synchronisation (12) est constitué par une bascule de type (D) ayant une entrée de données reliée à une sortie directe de la bascule (50) du circuit de test, une entrée horloge reliée à l'inverseur d'entrée, et une sortie directe et une sortie inverse reliées au circuit de sélection, que le circuit à retard (13) comporte une première (52) et une deuxième (53) lignes à retard en série, la première ligne à retard étant reliée en entrée à la sortie directe de la bascule (15) du répéteur et en sortie au circuit de sélection (14) par une première (a) et une deuxième (b) sorties, la deuxième ligne à retard étant reliée en entrée à la deuxième (b) sortie de la première ligne à retard et en sortie au circuit de sélection (14), et que le circuit de sélection comporte une première (54) et une deuxième (55) portes ET reliées en sortie à une porte NON-OU (56) elle même reliée en sortie à l'entrée de remise à zéro de la bascule (15) du répéteur, la première porte ET (54) ayant une première entrée reliée à la sortie inverse de la bascule du circuit de synchronisation et une deuxième entrée reliée à la deuxième sortie (b) de la première ligne à retard, la deuxième porte ET (55) ayant une première entrée reliée à la sortie directe de la bascule du circuit de synchronisation, une deuxième entrée reliée à la première sortie (a) de la première ligne à retard et une troisième entrée reliée à la sortie de la deuxième ligne à retard.

5. Dispositif de transmission selon la revendication 1, caractérisé par le fait qu'un récepteur (3) comporte un inverseur d'entrée (17), un circuit de test (18), un circuit de restitution (19), un premier inverseur de sortie (20), un circuit de détection (23), un circuit de synchronisation et de division (21) et un deuxième inverseur de sortie (22), que le circuit de test (18) est relié en entrée à l'inverseur d'entrée et en sortie au circuit de restitution, que le circuit de détection (23) est relié en entrée à l'inverseur d'entrée, par une première sortie au circuit de restitution et par une deuxième sortie au circuit de synchronisation et de division, que le circuit de restitution (19) à une première sortie reliée au premier inverseur de sortie (20) qui délivre un signal de synchronisation (HS), et une deuxième sortie reliée au circuit de synchronisation et de division (21) lui même relié en sortie au deuxième inverseur de sortie (22) qui délivre un signal d'horloge (H).

6. Dispositif de transmission selon la revendication 5, caractérisé par le fait que le circuit de test (18) comporte une bascule (40) de type (D) et une ligne à retard (41) reliée en sortie à une entrée horloge de la bascule, une entrée de la ligne à retard et une entrée de données de la bascule étant reliées à l'inverseur d'entrée, que le circuit de détection (23) comporte une bascule (42) de type (D) et une ligne à retard (43), une entrée horloge de la bascule étant reliée à l'inverseur d'entrée, la bascule ayant une sortie directe reliée au circuit de restitution (19) et une sortie inverse reliée d'une part au circuit de synchronisation et de division (21) et d'autre part à une entrée de remise à zéro de ladite bascule par la ligne à retard (43), que le circuit de restitution est constitué par une bascule de type (JK) ayant une première et une deuxième entrées reliées à la sortie directe et à la sortie inverse, respectivement, de la bascule du circuit de test (18), une entrée horloge reliée à la sortie directe de la bascule du circuit de détection, une sortie directe reliée au premier inverseur de sortie et une sortie inverse reliée au circuit de synchronisation et de division, et que le circuit de synchronisation et de division (21) est constitué par une bascule de type (JK) ayant une première entrée reliée à la sortie inverse du circuit de restitution, une entrée horloge reliée à la sortie inverse de la bascule du circuit de détection, une deuxième entrée reliée à un potentiel positif, et une sortie directe reliée au deuxième inverseur de sortie (22).

**Patentansprüche**

1. Schaltung zur Übertragung eines von einem Synchronisationssignal begleiteten Taktsignals, mit einem Sender (1), der einen Taktgeber (4) aufweist und einem an den Sender über eine Verbindungsleitung mit mindestens einem Zwischenverstärker (2) angeschlossenen Empfänger (3), der an die Verbrauchergeräte ein Taktsignal (H) und ein Synchronisationssignal (HS) liefert, dadurch gekennzeichnet, daß der Sender (1) zusätzlich zum Taktgeber einen Synchronisierkreis (5) eine Kippstufe (8), einen Selektionskreis (7) einen Verzögerungskreis (6) und einen Ausgangsinverter (9) aufweist, daß der Synchronisierkreis (5) eingangsseitig an den Taktgeber und mit einen ersten und einem zweiten Ausgang an den Selektionskreis (7) angeschlossen ist; daß der Selektionskreis ferner eingangsseitig über den Verzögerungskreis an einen direkten Ausgang der Kippstufe (8) und ausgangsseitig an einer Rückstelleingang der Klippstufe angeschlossen ist, und daß die Klippstufe (8) einen mit dem Taktgeber (4) verbundenen Takteingang, einen an ein positives Potential angeschlossenen Dateneingang, und einen direkten Ausgang aufweist, der mit dem Ausgangsinverter (9) verbunden ist, welcher ein Takt- und Synchronisationssignal (HM) am Ausgang des Senders liefert.

2. Übertragungsschaltung nach Anspruch 1, dadurch gekennzeichnet, daß der Synchronisierkreis (5) einen Zähler (30) und eine Kippstufe (31) vom Typ D umfaßt, wobei ein Zähleingang des Zählers mit dem Taktgeber (4), ein Dateneingang der Kippstufe (31) mit einem asynchronen (ripple carry) Ausgang des Zählers sowie ein direkter und ein invertierter Ausgang der Kippstufe mit dem Selektionskreis (7) verbunden sind, daß der Verzögerungskreis (6) eine erste (35) und eine zweite (36) in Reihe umfaßt, wobei die erste Verzögerungsleitung eingangsseitig an den direkten Ausgang der Kippstufe (8) des Senders und ausgangsseitig über einen ersten (a) und einen zweiten (b) Ausgang an den Selektionskreis (7) angeschlossen ist, während die zweite Verzögerungsleitung eingangsseitig an den zweiten Ausgang (b) der ersten Verzögerungsleitung und ausgangsseitig an den Selektionskreis angeschlossen ist, und daß der Selektionskreis (7) ein erstes (32) und ein zweites (33) UND-Tor aufweist, die ausgangsseitig an ein NOR-Tor (34) angeschlossen sind, das seinerseits ausgangsseitig mit dem Rückstelleingang der Kippstufe (8) des Senders verbunden ist, wobei das erste UND-Tor (32) über einen ersten Eingang mit dem direkten Ausgang der Kippstufe (31) des Synchronisierkreises (5) und über einen zweiten Eingang mit dem zweiten Ausgang (b) der ersten Verzögerungsleitung verbunden ist und das zweite UND-Tor über einen ersten Eingang mit dem invertierten Ausgang der Kippstufe (31) des Synchronisierkreises (5), über einen zweiten Eingang mit dem ersten Ausgang (a) der ersten Verzögerungsleitung und über einen dritten Eingang mit dem Ausgang der zweiten Verzögerungsleitung verbunden ist.

3. Übertragungsschaltung nach Anspruch 1, dadurch gekennzeichnet, daß ein Zwischenverstärker (2) einen Eingangsinverter (10), einen Testkreis (11) einen Synchronisierkreis (12), eine Kippstufe (15), einen Selektionskreis (14) eine Verzögerungsleitung (13) und einen Ausgangsinverter (16) aufweist, daß der Testkreis eingangsseitig an den Eingangsinverter und ausgangsseitig an den Synchronisierkreis angeschlossen ist, daß der Synchronisierkreis (12) ferner eingangsseitig an den Eingangsinverter und über einen ersten und einen zweiten Ausgang an den Selektionskreis angeschlossen ist, daß der Selektionskreis (14) ferner eingangsseitig über den Verzögerungskreis an einen direkten Eingang der Kippstufe (15) angeschlossen ist, und daß die Kippstufe (15) einen mit dem Eingangsinverter verbundenen Takteingang, einen mit einem positiven Potential versorgten Dateneingang und einen mit dem Ausgangsinverter (16) verbundenen direkten Ausgang aufweist, der ein Takt- und Synchronisationssignal (HMR) liefert.

4. Übertragungsschaltung nach Anspruch 3, dadurch gekennzeichnet, daß der Testkreis (11) eine Kippstufe (50) vom Typ D und eine ausgangsseitig mit einem Takteingang der Kippstufe verbundene Verzögerungsleitung (51) umfaßt, wobei ein Eingang der Verzögerungsleitung und ein Dateneingang der Kippstufe mit dem Eingangsinverter verbunden sind, daß der Synchronisierkreis (12) aus einer Kippstufe vom Typ D besteht, welche über einen Dateneingang mit einem direkten Ausgang der Kippstufe (50) des Testkreises, über einen Takteingang mit dem Eingangsinverter und über einen direkten Ausgang sowie einen invertierten Ausgang mit dem Selektionskreis verbunden ist, daß der Verzögerungskreis (13) eine erste (52) und eine zweite (53) Verzögerungsleitung in Reihe umfaßt, wobei die erste Verzögerungsleitung eingangsseitig an den direkten Ausgang der Kippstufe (15) des Zwischenverstärkers und ausgangsseitig über einen ersten (a) und einen zweiten (b) Ausgang an den Selektionskreis angeschlossen ist, während die zweite Verzögerungsleitung eingangsseitig an den zweiten Ausgang (b) der ersten Verzögerungs leitung und ausgangsseitig an den Wählkreis angeschlossen ist, und daß der Selektionskreis ein erstes (54) und ein zweites (55) UND-Tor aufweist, die ausgangsseitig mit einem NOR-Tor (56) verbunden sind, das seinerseits ausgangsseitig an den Rückstelleingang der Kippstufe (15) des Zwischenverstärkers angeschlossen ist, wobei das erste UND-Tor (54) über einen ersten Eingang mit dem direkten Ausgang der Kippstufe des Synchronisierkreises, über einen zweiten Eingang mit dem ersten Ausgang (a) der ersten Verzögerungsleitung und über einen dritten Eingang mit dem Ausgang der zweiten Verzögerungsleitung verbunden ist.

5. Übertragungsschaltung nach Anspruch 1, dadurch gekennzeichnet, daß ein Empfänger (3) einen Eingangsinverter (17), einen Testkreis (18) einen Wiederherstellungskreis (19) einen ersten Ausgangsinverter (20) einen Detektorkreis (23), einen Synchronisier- und Teilerkreis (21) und einen zweiten Ausgangsinverter (22) aufweist, daß der Testkreis (18) eingangsseitig mit dem Eingangsinverter und ausgangsseitig mit dem Wiederherstellungskreis verbunden ist, daß der Detektorkreis (23) eingangsseitig mit dem Eingangsinverter, über eine ersten Ausgang mit dem Wiederherstellungskreis und über eine zweiten Ausgang mit dem Synchronisier- und Teilerkreis verbunden ist, und daß der Wiederherstellungskreis (19) über einen ersten Ausgang mit dem ersten Ausgangsinverter (20), welcher ein Synchronisationssignal (HS) liefert, und über einen zweiten Ausgang mit dem Synchronisier- und Teilerkreis (21) verbunden ist, der seinerseits ausgangsseitig an den zweiten Ausgangsinverter (22) angeschlossen ist, welcher ein Taktsignal (H) liefert.

6. Übertragungsschaltung nah Anspruch 5, dadurch gekennzeichnet, daß der Testkreis (18) einen Kippstufe (40) vom Type D und eine ausgangsseitig mit einem Takteingang der Kippstufe verbundene Verzögerungsleitung (41) aufweist, wobei ein Eingang der Verzögerungsleitung und ein Dateneingang der Kippstufe mit dem Eingangsinverten verbunden sind, daß der Detektorkreis (23) eine Kippstufe (42) vom Typ D und eine Verzögerungsleitung (43) aufweist, wobei ein Takteingang der Kippstufe an den Eingangsinverter angeschlossen ist und die Kippstufe über einen direkten Ausgang mit dem Wiederherstellungskreis (19) und über einen invertierten Ausgang einerseits mit dem Synchronisier- und Teilerkreis (21) und andererseits mit einem Rückstelleingang der Kippstufe über die Verzögerungsleitung verbunden ist, daß der Wiederherstellungskreis aus einer Kippstufe vom Typ JR besteht, die über einen ersten bzw. einen zweiten Eingang mit dem direkten bzw. dem invertierten Ausgang der Kippstufe des Testkreises (18), über einen direkten Ausgang mit dem ersten Ausgangsinverter und über einen invertierten Ausgang mit dem Synchronisier- und Teilerkreis verbunden ist, und daß der Synchronisier- und Teilerkreis (21) aus einer Kippstufe vom Typ JK, besteht, welche über einen ersten Eingang mit dem invertierten Ausgang des Wiederherstellungskreises, über einen Takteingang mit dem invertierten Ausgang der Kippstufe des Detektorkreises, über einen zweiten Eingang mit einem positiven Potential und über einen direkten Ausgang mit dem zweiten Ausgangsinverter (22) verbunden ist.

## Claims

1. A device for transmitting a clock signal accompanied by a synchronization signal, comprising a transmitter (1) having a clock (4), a receiver (3) connected to the transmitter via a link including at least one repeater (2), said receiver delivering a clock signal (H) and a synchronization signal (HS) to user equipments, characterized in that the transmitter (1) comprises, in addition to the clock, a synchronization circuit (5), a flip-flop (8), a selector circuit (7), a delay circuit (6) and an output inverter (9), that the synchronization circuit (5) has an input connected to the clock and first and second outputs connected to the selector circuit (7) that the selector circuit has an input connected to a direct output of the flip-flop (8) via the delay circuit and an output connected to a reset input of the flip-flop, and that the flip-flop (8) has a clock input connected to said clock (4), a data input adapted to be connected to a positive potential and a direct output connected to the output inverter (9) which delivers a clock and synchronization signal (HM) to the output of the transmitter.

2. A transmission device according to claim 1, characterized in that the synchronization circuit (5) comprises a counter (30) and a type D flip-flop (31), the counter having a count input connected to the clock (4), the flip-flop (31) having a data input connected to a "ripple carry" output of the counter and a direct output and a complemented output which are both connected to the selector circuit (7), that the delay circuit (6) comprises first (35) and second (36) delay lines connected in series, the first delay line having an input connected to the direct output of the flip-flop (8) of the transmitter and first (a) and second (b) outputs connected to the selector circuit (7), the second delay line having an input connected to the second output (b) of the first delay line and an output connected to the selector circuit, and that the selector circuit (7) comprises first (32) and second (33) AND gates, whose outputs are connected to a NOR gate (34), which in turn is connected to the reset input of the flip-flop (8) of the transmitter, the first AND gate (32) having a first input connected to the direct output of the flip-flop (31) of the synchronization circuit (5) and a second input connected to the second output (b) of the first delay line, and the second AND gate having a first input connected to the complemented output of the flip-flop (31) of the synchronization circuit (5), a second input connected to the first output (a) of the first delay line, and a third input connected to the output of the second delay line.

3. A transmission device according to claim 1, characterized in that the repeater (2) comprises an input inverter (10), a test circuit (11), a synchronization circuit (12), a flip-flop (15), a selector circuit (14), a delay circuit (13) and an output inverter (16), that the test circuit has an input connected to the input inverter and an output connected to the synchronization circuit, that the synchronization circuit (12) has also an input connected to the input inverter and first and second outputs connected to the selector circuit, that the selector circuit (14) has also an input connected to a direct output of the flip-flop (15) via the delay circuit and an output connected to a reset input of the flip-flop, and that the flip-flop (15) has a clock input connected to the input inverter, a data input adapted to be connected to a positive potential and a direct output connected to the output inverter (16) which delivers a clock and synchronization signal (HMR).

4. A transmission device according to claim 3, characterized in that the test circuit (11) comprises a type D flip-flop (50) and a delay line (51) having an output connected to a clock input of the flip-flop, an input of the delay line and a data input of the flip-flop being connected to the input inverter, that the synchronization circuit (12) is constituted by a type D flip-flop having a data input connected to a direct output of the flip-flop (50) of the test circuit, a clock input connected to the input inverter and a direct output and a complemented output both connected to the selector circuit, that the delay circuit (13) comprises first (52) and second (53) delay lines connected in series, the first delay line having an input connected to the direct output of the flip-flop (15) of the repeater and first (a) and second (b) outputs connected to the selector circuit (14), the second delay line having an input connected to the second output (b) of the first delay line and an output connected to the selector circuit (14), and that the selector circuit comprises first (54) and second (55) AND gates having outputs connected to a NOR gate (56) the output of which is connected to the reset input of the flip-flop (15) of the repeater, the first AND gate (54) having a first input connected to the complemented output of the flip-flop of the synchronization circuit and a second input connected to the second output (b) of the first delay line, the second AND gate (55) having a first input connected to the direct output of the flip-flop of the synchronization circuit, a second input connected to the first output (a) of the first delay line and a third input connected to the output of the second delay line.

5. A transmission device according to claim 1, characterized in that a receiver (3) comprises an input inverter (17), a test circuit (18), a restore circuit (19), a first output inverter (20), a detector circuit (23), a synchronization and divider circuit (21) and a second output inverter (22), that the test circuit (18) has an input connected to the input inverter and an output connected to the restore circuit, that the detector circuit (23) has an input connected to the input inverter, a first output connected to the restore circuit and a second output connected to the synchronization and divider circuit, that the restore circuit (19) has a first output connected to the first output inverter (20) which delivers a synchronization signal (HS), and a second output connected to the synchronization and divider circuit (21) which has an output connected to the second output inverter (22) which delivers a clock signal (H).

6. A transmission device according to claim 5 characterized in that the test circuit (18) comprises a type D flip-flop (40) and a delay line (41) having an output connected to a clock input of the flip-flop, an input of the delay line and a data input of the flip-flop being connected to the input inverter, that the detector circuit (23) comprises a type D flip-flop (42) and a delay line (43), a clock input of the flip-flop being connected to the input inverter, the flip-flop having a direct output connected to the restore circuit (19) and a complemented output connected on the one hand to the synchronization and divider circuit (21) and on the other hand to a reset input of said flip-flop via the delay line (43), that the restore circuit is constituted by a type JK flip-flop having first and second inputs respectively connected to the direct output and the complemented output of the flip-flop of the test circuit (18), a clock input connected to the direct output of the flip-flop of the detector circuit, a direct output connected to the first output inverter and a complemented output connected to the synchronization and divider circuit, and that the synchronization and divider circuit (21) is constituted by a type JK flip-flop having a first input connected to the complemented output of the restore circuit, a clock input connected to the complemented output of the flip-flop of the detector circuit, a second input adapted to be connected to a positive potential, and a direct output connected to the second output inverter (22).

FIG. 1

EP 0 190 731 B1

FIG. 2

# FIG. 3

# FIG. 4

# FIG. 5

# FIG. 6

# FIG. 7

# FIG. 8